# EUROPÄISCHE PATENTANMELDUNG

(11) **EP 3 974 402 A1**
(43) Veröffentlichungstag der Anmeldung: **30.03.2022**
(21) Anmeldenummer: 21195258.5
(22) Anmeldetag: 07.09.2021
(51) Int. Cl.: C04B 33/32, C04B 35/64, F27B 9/04, F27B 9/30

(54) **BRENNOFEN FÜR KERAMISCHE ERZEUGNISSE ZUM ERZEUGEN EINER DEFINIERTEN BRENNFARBE MITTELS WASSERDAMPF**

(30) Priorität: 23.09.2020 DE 202020004019 U
(71) Anmelder: IAB - Institut für Angewandte Bauforschung Weimar gemeinnützige GmbH, 99428 Weimar (DE)
(72) Erfinder: HOHMANN, Marc, 99423 Weimar (DE); HESKY, Daniela, 99423 Weimar (DE); EPPNER, Alexander, 99444 Blankenhain (DE)
(74) Vertreter: Gleim Petri Oehmke Patent- und Rechtsanwaltspartnerschaft mbB

(57) **Zusammenfassung**

Die Erfindung betrifft ein Verfahren zur Herstellung keramischer Erzeugnisse, umfassend nacheinander die folgenden Schritte: a) Trocknung und Erwärmung des Brenngutes auf Temperaturen von 400 °C bis 475 °C, in einer oxidierenden Atmosphäre, die wesentlich durch die Anwesenheit von Umgebungsluft erzeugt wird; b) weiteres Erwärmen des Brenngutes und Brennen des Brenngutes bei Temperaturen zwischen 800 °C und 1300 °C sowie einem Halten der Temperatur unter reduzierender Atmosphäre, die ein Wasserdampf-Gas-Gemisch enthält, wobei das Gas synthetisch hergestellt ist; c) Halten der Temperatur und anschließendes Abkühlen auf 225 °C bis 275 °C unter reduzierender Atmosphäre; d) weiteres Abkühlen des Brennguts auf Umgebungstemperatur unter oxidierender Atmosphäre, die im Wesentlichen aus Umgebungsluft besteht.

## Beschreibung

### Gebiet der Erfindung

Die Erfindung ist auf dem Gebiet thermischer Prozesse für die Herstellung keramischer Erzeugnisse angesiedelt und betrifft ein Verfahren zur Steuerung des Redoxzustandes, der Farbe und der Mineralphasenausbildung von keramischen Erzeugnissen während des keramischen Brandes.

### Stand der Technik

Keramische Erzeugnisse werden in großen Mengen als Wandbaustoff (Ziegel, Klinker) oder als Dachbedeckung (Dachziegel) eingesetzt. Typischerweise werden diese in einem Tunnelofen bei (je nach Produkt) Temperaturen zwischen 800 °C und 1300 °C gebrannt. Dabei entsteht am Endprodukt die für Ziegelerzeugnisse typische rote Farbe.

Bisher werden die Farbgebung, der Redoxzustand und Mineralphasenausbildung von keramischen Erzeugnissen über die Zugabe von oxidierenden bzw. reduzierenden Komponenten zum Gemenge sowie über den Sauerstoffpartialdruck der Ofenatmosphäre gesteuert.

Ein Verfahren zur gleichzeitigen Herstellung von grobkeramischen Erzeugnissen und Brenngas in einem gasdichten abgeschlossenen, indirekt beheizten Aggregat wird in DE 32 16 153 A1 beschrieben, wobei bei einer Temperaturbehandlung bis 900 °C der Ton hydrothermal verfestigt und eine Ent- bzw. Vergasung der enthaltenen Bestandteile erfolgt. Im Temperaturabschnitt bis 200 °C erfolgt eine Trocknung, bis 900 °C die hydrothermale Verfestigung, wobei bei 700 — 900 °C das Vergasungsmittel (z.B. Wasser) über eine Zeiteinheit zugeführt wird. Auf ein Vergasungsmittel kann jedoch verzichtet werden, wenn während der Dehydroxylation der Tonminerale und der Karbonatentsäuerung genug Wasser bzw. CO2 freigesetzt werden. Ferner wird ein Überdruck von mindestens 100 Pa bis zum Beginn der Kühlung aufrechterhalten.

Ein Blaudämpfofen für kontinuierlichen Betrieb wird in der Patentschrift 82371 beschrieben, wobei verschiedene Kammern energiesparend beheizt werden und die Kammern luftdicht abgeschlossen sind.

Die Patentschrift DE 19 791 beschreibt eine Konstruktion eines Blaudämpfofens, der zum Brennen und Dämpfen von blauen bzw. grauen und schwarzen Tonwaren, insbesondere von Falzziegeln und Dachpfannen, dient.

Ein in DD 254 426 A1 beschriebenes Verfahren zur Einstellung der Ofenatmosphäre in Tunnelöfen beschreibt eine reduzierte Brennatmosphäre unter Beibehaltung herkömmlicher Brenneranlagen und Ofenkonstruktionen zur Herstellung von Erzeugnissen unterschiedlicher Färbung.

In DE 199 09 043 A1 wird ein Verfahren beschrieben, bei dem das Brennen von Ziegelerzeugnissen in einer Atmosphäre erfolgt, in der chlorhaltige Abgase gemeinsam mit einem Gemisch aus Schwelgas und Wasserdampf in den Brennraum eingeleitet wird und mit einer Mindesttemperatur von 400 °C in die Abgasreinigungsanlage abgeleitet wird.

Die Veränderung der Farbe keramischer Massen unter reduzierter Brennatmosphäre wird allgemein in "Vom Ziegelgott zum Industrieelektroniker, Geschichte der Ziegelherstellung von den Anfängen bis heute" von Willi Bender, herausgegeben vom Bundesverband der Deutschen Ziegelindustrie e.V. Bonn, 1. Auflage 2004 (ISBN 3-9807595-1-2), beschrieben.

Nachteilig an diesen Lösungen ist, dass das zum Erreichen einer reduzierenden Atmosphäre im Brennraum und der damit verbundenen Reduzierung des Sauerstoffgehaltes durch das Einbringen von Schwelgasen erfolgt. Diese oder ähnliche Gase verbleiben nicht dauerhaft im Brennraum, so dass sie in der Regel an die Außenluft abgegeben werden. Diese Schwelgase stellen teilweise ein erhebliches Umweltproblem dar.

Alternativ kann der Prozess des Brennens in zwei Schritten erfolgen. Schritt eins entspricht dabei dem herkömmlichen Brennen. Schritt zwei ist ein gesonderter, nachgeschalteter Brand, in dem eine spezielle Atmosphäre eingestellt ist und den Produkten die gewünschte Brennfarbe verleiht.

### Beschreibung der Erfindung

Daher ist es Aufgabe der Erfindung, eine Brennatmosphäre zu erzeugen, die variierende Sauerstoffpartialdrücke in der Brennatmosphäre während des keramischen Brandes einstellt. Dies wird gemäß den Patentansprüchen gelöst, wobei vorteilhafte Ausgestaltungen in den Unteransprüchen formuliert sind.

Erfindungsgemäß erfolgt der keramische Brand unter Verwendung eines Prozessgases aus einem Wasserdampf-Gas-Gemisch (WDG). Als Prozessgas (WDG) kann Wasserdampf in Kombination mit synthetischem Wasserstoff, Kohlenmonoxid, Kohlendioxid, Schwefeldioxid sowie Verbrennungsgasen und deren Gemische Anwendung finden. Der Einsatz des Prozessgases (WDG) kann unter den variierbaren Bedingungen: Temperatur, Druck, Zusammensetzung und Menge Anwendung finden.

Die zum Brennen der keramischen Erzeugnisse nötige Prozesswärme kann im Brennaggregat (z.B. Ofen) durch direkte und/oder indirekte Befeuerung erzeugt werden. Die Art der Befeuerung hat keinen Einfluss auf die Erzeugung der erfindungsgemäßen Brennatmosphäre.

Dabei wird der für Farbe und Mineralphasen-Neu- und Umbildungen verantwortliche Sauerstoffpartialdruck über das Prozessgas (WDG), d.h. den Wasserdampfanteil, gezielt eingestellt. Darüber hinaus wird durch den Wasserdampf, in Abhängigkeit der Brennatmosphäre (Druck, Temperatur), der sich im Brennraum bzw. über dem Brenngut einstellende Redoxzustand (H₂0(g) / H₂) gesteuert.

Des Weiteren kann durch den Gehalt von 0,1 bis 5 Vol.-% CO₂/CO im Prozessgas entsprechend dem "Bouduard-Gleichgewicht" Einfluss auf die Brennfarbe des Erzeugnisses genommen werden.

Damit ermöglicht diese Methode eine gezielte Beeinflussung der Brennfarbe (weiß, grau, grau-blau bis schwarz) sowie die keramische Verfestigung des Scherbens der Erzeugnisse.

### Kurze Beschreibung der Zeichnungen

- Fig. 1: zeigt eine erste beispielhafte Brennkurve und
- Fig. 2: zeigt eine zweite beispielhafte Brennkurve

### Ausführliche Beschreibung der Zeichnungen

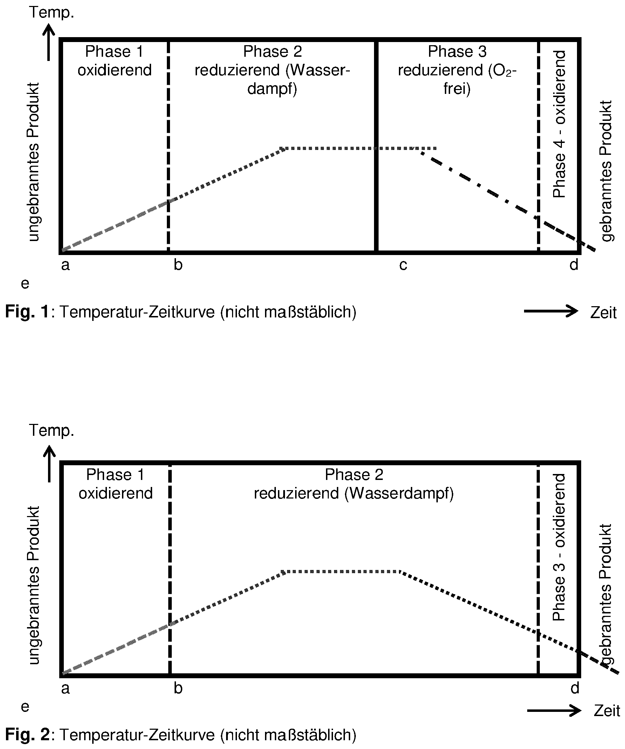

In Fig. 1 ist eine erste beispielhafte Brennkurve angegeben. Das ungebrannte Produkt (z. B. Ziegel, Dachziegel) wird in Phase 1 im Abschnitt a-b bei oxidierender Atmosphäre (unter Anwesenheit von Luftsauerstoff) erwärmt. An Punkt a beginnt der Brand durch Erwärmen des Brennguts. Dabei wird das Produkt getrocknet und bei einer Temperatur von ca. 450 °C ± 15 °C gelangt dieses in Phase 2 im Abschnitt b-c. Dies erfolgt bei Punkt b im Übergangsbereich von oxidierendem Brand zu reduzierendem Brand. Die Erwärmung wird auf eine Brenntemperatur, welche auf das Produkt abgestimmt ist, in Phase 2 fortgesetzt, wobei die Brenntemperatur in Phase 2 zwischen 800 °C und 1300 °C liegt. Das Brennen erfolgt in reduzierender Wasserdampfatmosphäre mit einem Wasserdampf-Gas-Gemisch (WDG). Die Brenntemperatur wird bis zum Ende der Phase 2 gehalten. Punkt c kennzeichnet den Übergangsbereich von reduzierender, wasserdampfhaltiger Brandatmosphäre zu reduzierender, wasserdampffreier Brandatmosphäre. In Phase 3 im Abschnitt c-d wird das Produkt zunächst weiterhin auf Brenntemperatur gehalten, wobei jedoch eine reduzierte Atmosphäre, also sauerstoffarm, vorhanden ist. In dieser Phase in reduzierter Atmosphäre beginnt ebenfalls die Abkühlung der Produkte, die in Phase 4 im Abschnitt d-e unter Anwesenheit von Luftsauerstoff fortgesetzt wird. Die Übergabetemperatur am Punkt d zwischen Phase 3 und Phase 4 beträgt ca. 250 °C± 15 °C. Das gebrannte keramische Erzeugnis wird in Phase 4 unter Umgebungsluft auf Umgebungstemperatur abgekühlt.

In Fig. 2 ist eine zweite beispielhafte Brennkurve angegeben. Das ungebrannte Produkt (z. B. Ziegel, Dachziegel) wird in Phase 1 im Abschnitt a-b bei oxidierender Atmosphäre (unter Anwesenheit von Luftsauerstoff) erwärmt. An Punkt a beginnt der Brand durch Erwärmen des Brennguts. Dabei wird das Produkt getrocknet und bei einer Temperatur von ca. 450 °C ± 15 °C gelangt dieses in Phase 2 im Abschnitt b-d. Dies erfolgt bei Punkt b im Übergangsbereich von oxidierendem Brand zu reduzierendem Brand. Die Erwärmung wird auf eine Brenntemperatur, welche auf das Produkt abgestimmt ist, in Phase 2 fortgesetzt, wobei die Brenntemperatur in Phase 2 zwischen 800 °C und 1300 °C liegt. Nach einer auf das Produkt abgestimmten Brenndauer, bei der die Brenntemperatur gehalten wird, wird das Produkt abgekühlt. Das weitere Erwärmen in Phase 2, das Halten der Brenntemperatur sowie das Abkühlen in Phase 2 erfolgt in reduzierender Wasserdampfatmosphäre mit einem Wasserdampf-Gas-Gemisch (WDG). In Phase 3 im Abschnitt d-e wird unter Anwesenheit von Luftsauerstoff die Abkühlung des Produktes fortgesetzt. Die Übergabetemperatur am Punkt d zwischen Phase 2 und Phase 3 beträgt ca. 250 °C± 15 °C. Das gebrannte keramische Erzeugnis wird in Phase 3 unter Umgebungsluft auf Umgebungstemperatur abgekühlt.

### Bezuaszeichen

- a: Beginn des Brandes durch Erwärmen des Brenngutes
- b: Übergangsbereich von oxidierendem Brand zu reduzierendem Brand bei Temperaturen von 450 °C ± 15 °C
- c: Übergangsbereich von reduzierender, wasserdampfhaltigen Brandatmosphäre zur reduzierender, wasserdampffreier Brandatmosphäre (800 bis 1300 °C)
- d: Übergangsbereich von reduzierendem Brand zu oxidierendem Brand bei Temperaturen von 250 °C ± 15 °C
- e: Abkühlung des Brennproduktes auf Umgebungstemperatur

## Patentansprüche

1. Verfahren zur Herstellung keramischer Erzeugnisse, umfassend nacheinander die folgenden Schritte:
a) Trocknung und Erwärmung des Brenngutes auf Temperaturen von 400 °C bis 475 °C, in einer oxidierenden Atmosphäre, die wesentlich durch die Anwesenheit von Umgebungsluft erzeugt wird;
b) weiteres Erwärmen des Brenngutes und Brennen des Brenngutes bei Temperaturen zwischen 800 °C und 1300 °C sowie einem Halten der Temperatur unter reduzierender Atmosphäre, die ein Wasserdampf-Gas-Gemisch enthält, wobei das Gas synthetisch hergestellt ist;
c) Halten der Temperatur und anschließendes Abkühlen auf 225 °C bis 275 °C unter reduzierender Atmosphäre;
d) weiteres Abkühlen des Brennguts auf Umgebungstemperatur unter oxidierender Atmosphäre, die im Wesentlichen aus Umgebungsluft besteht.

2. Verfahren nach Anspruch 1, **dadurch gekennzeichnet, dass** in Schritt a) das Brenngut auf Temperaturen auf 450±15 °C erwärmt wird.

3. Verfahren nach Anspruch 1 oder 2, **dadurch gekennzeichnet, dass** die Schritte b) und c) unter der gleichen Atmosphäre erfolgen.

4. Verfahren nach einem der Ansprüche 1 bis 3, **dadurch gekennzeichnet, dass** als Wasserdampf-Gas-Gemisch zur Erzeugung der reduzierenden Atmosphäre ein Gemisch aus Wasserdampf, Wasserstoff, Kohlenmonoxid, Kohlendioxid, Schwefeldioxid sowie Verbrennungsgase und/oder Gemische daraus verwendet wird.

5. Brennofen zur Herstellung keramischer Erzeugnisse, **gekennzeichnet durch** einen ersten bis vierten Ofenabschnitt, wobei
a) der erste Ofenabschnitt zur Trocknung und Erwärmung des Brenngutes ausgelegt ist und eine Temperatur von höchstens 400 °C bis 475 °C aufweist, sowie eine oxidierende Atmosphäre, die wesentlich durch die Anwesenheit von Umgebungsluft erzeugt ist (a - b),
b) der zweite Ofenabschnitt zum weiteren Erwärmen des Brenngutes und zum Brennen des Brenngutes ausgelegt ist, höchstens eine Temperatur zwischen 800 °C und 1300 °C aufweist sowie eine reduzierende Atmosphäre, die ein Wasserdampf-Gas-Gemisch enthält, wobei das Gas synthetisch hergestellt ist (b - c),
c) der dritte Ofenabschnitt zum Halten der Temperatur und zum Abkühlen auf 225 °C bis 275 °C unter reduzierender Atmosphäre ausgelegt ist,
d) der vierte Ofenabschnitt zum weiteren Abkühlen auf Umgebungstemperatur unter oxidierender Atmosphäre, die im Wesentlichen aus Umgebungsluft besteht, ausgelegt ist .

6. Brennofen nach Anspruch 5 **dadurch gekennzeichnet, dass** der Brennofen in Brennabschnitt c) die gleiche Atmosphäre aufweist wie Brennabschnitt b).

7. Brennofen nach Anspruch 5 oder 6, **dadurch gekennzeichnet, dass** das Gas-gemisch zur Erzeugung einer reduzierenden Atmosphäre ein Wasserdampf, Wasserstoff, Kohlenmonoxid, Kohlendioxid, Schwefeldioxid sowie Verbrennungsgase und/oder Gemische daraus sind.

8. Brennofen nach einem der Ansprüche 5 bis 7, **dadurch gekennzeichnet, dass** die Temperatur im ersten Abschnitt maximal 450±15 °C beträgt.

9. Brennofen nach einem der Ansprüche 5 bis 8, **dadurch gekennzeichnet, dass** der Brennofen ein Tunnelofen, Haubenofen oder Kammerofen ist.
